# EUROPÄISCHE PATENTSCHRIFT

(11) **EP 4 488 082 B1**
(45) Veröffentlichungstag und Bekanntmachung des Hinweises auf die Patenterteilung: **27.08.2025**
(21) Anmeldenummer: 23182961.5
(22) Anmeldetag: 03.07.2023
(51) Int. Cl.: B60H 1/00, B60H 1/32

(54) **TRANSPORTKÄLTEMASCHINE MIT ELEKTRONIKEINHEIT UND NUTZFAHRZEUG MIT TRANSPORTKÄLTEMASCHINE**
TRANSPORT REFRIGERATION MACHINE HAVING AN ELECTRONICS UNIT AND COMMERCIAL VEHICLE HAVING A TRANSPORT REFRIGERATION MACHINE
MACHINE FRIGORIFIQUE DE TRANSPORT DOTÉE D'UNE UNITÉ ÉLECTRONIQUE ET VÉHICULE UTILITAIRE DOTÉ D'UNE MACHINE FRIGORIFIQUE DE TRANSPORT

(43) Veröffentlichungstag der Anmeldung: 08.01.2025
(73) Patentinhaber: Schmitz Cargobull AG, 48341 Altenberge (DE)
(72) Erfinder: RÜBIG, Michael, 77830 Bühlertal (DE); BARTELT, Gerd, 77767 Appenweier (DE)
(74) Vertreter: Cohausz & Florack

(56) Entgegenhaltungen:
- EP-A1- 4 080 708
- US-A1- 2007 195 079
- US-A1- 2021 347 225

## Beschreibung

Die Erfindung betrifft eine Transportkältemaschine zur Kühlung eines Kofferaufbaus eines Nutzfahrzeugs, insbesondere eines Lastkraftwagens, eines Anhängers oder eines Sattelaufliegers, mit einem Kältekreislauf zur Kreislaufführung eines Kältemittels und mit einer Elektronikeinheit zum Betreiben des Kältekreislaufs, wobei der Kältekreislauf wenigstens einen Verdampfer zum Verdampfen des Kältemittels, einen Verdichter zum Verdichten des im Verdampfer verdampften Kältemittels, einen Kondensator zum Kondensieren des im Verdichter verdichteten Kältemittels und eine Drossel zum Entspannen des im Kondensator kondensierten Kältemittels umfasst, wobei die Elektronikeinheit in einem Elektronikgehäuse aufgenommen ist und wobei das Elektronikgehäuse wenigstens einen Teil wenigstens eines Stromkreises aufweist. Ferner betrifft die Erfindung ein Nutzfahrzeug, insbesondere Lastkraftwagen, Anhänger oder Sattelauflieger, mit einem Kofferaufbau, einer Transportkältemaschine zum Kühlen eines im Kofferaufbau vorgesehenen Laderaums und einer, insbesondere unterhalb des Kofferaufbaus angeordneten, Batterie zum Betrieb der Transportkältemaschine.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

Das Dokument EP 4080708 A1 zeigt ein Nutzfahrzeug mit einer Transportkältemaschine.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf. Die Paneele umfassen dabei eine äußere und eine innere, strukturgebende Decklage sowie eine dazwischen vorgesehene Kernlage, die typischerweise aus einem geschäumten Kunststoff gebildet wird. Dabei können die innere und/oder die äußere Decklage selbst bedarfsweise mehrlagig aufgebaut sein. Durch die hohe thermische Isolationswirkung der Kernlage aus geschäumtem Kunststoff bieten sich entsprechende Kofferaufbauten zum Transportieren von zu kühlender Ladung an, wozu an den Stirnwänden der Kofferaufbauten Transportkältemaschinen montiert sind. Die Transportkältemaschinen saugen Luft aus dem Laderaum an, kühlen diese herunter und blasen die gekühlte Luft wieder in den Laderaum hinein. Um mehrere Zonen des Laderaums bedarfsweise unabhängig voneinander zu kühlen, können an der Decke in entsprechenden Zonen der Laderäume sogenannte Deckenverdampfer vorgesehen sein, die von der Transportkältemaschine mit Kältemittel versorgt werden.

Die Transportkältemaschinen sind typischerweise von einem Gehäuse an der Stirnwand nach vorne und zur Seite abgegrenzt. In den Transportkältemaschinen ist zudem ein Kältekreislauf mit einem Verdampfer vorgesehen. In dem Verdampfer wird ein zuvor über eine Drossel entspanntes Kältemittel verdampft, wobei das Kältemittel über eine Wärmetauscherfläche Wärme von der Luft des Laderaums aufnimmt. Das Kältemittel wird sodann verdichtet und in einem Kondensator kondensiert, wozu der Kondensator ebenfalls eine Wärmetauscherfläche aufweist, so dass die beim Kondensieren des Kältemittels freiwerdende Wärme an die Umgebung abgeführt werden kann.

Der Kältekreislauf der Transportkältemaschine kann über eine Verbrennungsmaschine, rein elektrisch oder auch hybrid angetrieben werden. Die Verbrennungsmaschine dient dabei insbesondere dem Antrieb des Verdichters und der Bereitstellung des für den Betrieb der Transportkältemaschine benötigten Stroms. Dabei kann die Verbrennungsmaschine den Verdichter direkt antreiben oder aber im Falle eines hybriden Betriebs zunächst einen Generator zur Stromerzeugung antreiben. Der von dem Generator erzeugte Strom kann dann einen Elektromotor zum Antrieb des Verdichters betreiben. Der über den Generator erzeugte Strom kann alternativ oder zusätzlich noch zum Betreiben von weiteren elektrischen Baugruppen genutzt werden. Um gänzlich auf eine Verbrennungsmaschine verzichten zu können, kann der Transportkältemaschine auch eine hinreichend große Batterie für einen rein elektrischen Betrieb zugeordnet werden. Diese Batterie kann beispielsweise in regelmäßigen Abständen an ein externes, stationäres Stromnetz angeschlossen werden, um die Batterie zu laden. Alternativ oder zusätzlich kann das Nutzfahrzeug eine sogenannte Generatorachse aufweisen, mit der während der Fahrt des Nutzfahrzeugs Strom generiert wird, um die Transportkältemaschine zu betreiben und/oder die Batterie des Nutzfahrzeugs zu laden. Bei einer Generatorachse handelt es sich um eine Achse, die mit einem von der Achse angetriebenen Generator gekoppelt ist.

Unabhängig von der Art der Transportkältemaschine, insbesondere aber bei einer hybrid oder rein elektrisch betriebenen Transportkältemaschine, bietet es sich an, elektrische und/oder elektronische Bauteile der Elektronikeinheit in einem Elektronikgehäuse zusammenzufassen. Dort sind die entsprechenden elektrischen und/oder elektronischen Baugruppen vor Umwelteinflüssen geschützt. Zugleich sind aber auch Personen, etwa bei einer Wartung oder Reparatur, vor einem versehentlichen Stromschlag geschützt. Die Verwendung eines Elektronikgehäuses macht jedoch einen Anschluss desselben, an die elektrischen und/oder elektronischen Bauteile außerhalb des Elektronikgehäuses, wie etwa den Verdichter, eine Batterie, eine Generatorachse oder eine elektrische Steckverbindung zum Anschluss der Transportkältemaschine an ein externes Stromnetz, erforderlich.

Da an wenigstens einem Teil eines Stromkreises der Elektronikeinheit im Elektronikgehäuse sehr hohe Spannungen anliegen können, muss ein Monteur zum Zwecke der Wartung und/oder Reparatur der Elekronikeinheit im Elektronikgehäuse sicherstellen, dass der Zugang zur Elektronikeinheit im Elektronikgehäuse verhältnismäßig gefahrlos möglich ist. Dies muss meist vor dem Öffnen des Elektronikgehäuses erfolgen und ist teilweise aufwändig. Daher verlängert sich die für die Wartung und/oder Reparatur benötigte Zeit, was letztlich zu zusätzlichen Kosten führt.

Daher liegt der vorliegenden Erfindung die Aufgabe zugrunde, die Transportkältemaschine und das Nutzfahrzeug jeweils der eingangs genannten und zuvor näher erläuterten Art derart auszugestalten und weiterzubilden, dass Wartungs- und/oder Reparaturarbeiten an der Elektronikeinheit im Elektronikgehäuse, sicher, zuverlässig, schnell und kostengünstig erfolgen können.

Diese Aufgabe ist bei einer Transportkältemaschine nach dem Oberbegriff von Anspruch 1 dadurch gelöst, dass das Elektronikgehäuse wenigstens zwei von außen zugängliche und mit dem wenigstens einen Teil des wenigstens einen Stromkreises elektrisch verbundene Messbuchsen oder Messstecker zur Messung der Spannung des wenigstens einen Stromkreises über einen mit den Messbuchsen oder Messsteckern verbindbaren zweipoligen Spannungsprüfer aufweist.

Die Messbuchsen oder Messstecker erlauben es mit einem gewöhnlichen zweipoligen Spannungsprüfer die Spannung des Stromkreises innerhalb des Elektronikgehäuses zu messen, um anhand der anliegenden Spannung entscheiden zu können, ob das Elektronikgehäuse ohne oder mit einem vertretbaren Risiko geöffnet werden kann. Da die Messbuchsen oder Messstecker von außen am Elektronikgehäuse zugänglich sind, muss das Elektronikgehäuse nicht bereits vor der Messung der Spannung des wenigstens einen Stromkreises geöffnet werden. Zudem können Standardbuchsen oder Standardstecker verwendet werden, über die mit gängigen zweipoligen Spannungsprüfern die Spannung des wenigstens einen Stromkreises gemessen werden kann. Es ist also für einen Monteur bereits ohne besondere Schulung erkennbar, an welchen Messbuchsen oder Messsteckern die Spannung des wenigstens einen Stromkreises im Elektronikgehäuse gemessen werden kann und dass überhaupt an den Messbuchsen oder Messsteckern eine Spannung mit einem zweipoligen Spannungsprüfer gemessen werden kann. Eine versehentliche Fehlbedienung ist daher kaum möglich.

Mit Hilfe des Spannungsprüfers und der Messbuchsen bzw. der Messstecker am Elektronikgehäuse kann bedarfsweise insbesondere festgestellt werden, dass an dem wenigstens einen mit den Messbuchsen oder Messsteckern verbundenen Stromkreis keine Spannung anliegt, der Stromkreis also spannungsfrei ist. Denkbar ist aber auch, dass mit Hilfe des Spannungsprüfers lediglich festgestellt werden muss, dass eine bestimmte Grenzspannung des wenigstens einen Stromkreises unterschritten ist, bevor das Elektronikgehäuse mit einem vertretbaren Risiko geöffnet werden kann.

Zweipolige Spannungsprüfer werden vielfach auch als Duspol bezeichnet, wobei es sich jedoch eigentlich um einen Markennahmen handelt. und eignen sich zum Feststellen einer Spannung an einer elektrischen Leitung. Durch die zweipolige Ausgestaltung liefert dieser Spannungsprüfer eine zuverlässigere Anzeige als ein einpoliger Spannungsprüfer, wie etwa ein Phasenprüfer. Zweipolige Spannungsprüfer sind in verschiedenen Ausführungen bekannt und umfassen regelmäßig zwei isolierte Griffe, die mit jeweils einer Messleitung und jeweils einer Messspitze verbunden sind. Während die eine Messspitze typischerweise keine weitere Funktion hat, außer den Kontakt zu einem der Messpunkte herzustellen, weist die andere Messspitze in der Regel ein Anzeigeelement auf, welches anzeigen kann, ob eine Spannung anliegt. Oft kann das Anzeigeelement aber auch unterschiedliche Spannungsbereiche der anliegenden Spannung anzeigen, so dass entsprechende Spannungsprüfer als grobe Messgeräte für die anliegende Spannung angesehen werden können. Zur Spannungsprüfung wird meist eine Messspitze an das Masse- oder Erdpotential angeschlossen, während die andere Messspitze mit der Phase verbunden wird. Zur Kontrolle tauscht man beide Messspitzen und prüft die Spannung erneut.

Vorliegend ist die Verwendung von Messbuchsen gegenüber Messsteckern bevorzugt, da Messbuchsen die Spannungsprüfung mit gewöhnlichen zweipoligen Spannungsprüfern erleichtern. Zudem ist bei Messbuchsen die Gefahr der versehentlichen Berührung von gegebenenfalls vorstehenden, spannungsführenden Elementen deutlich geringer. Zudem können Messbuchsen grundsätzlich leichter mit einer Kappe versehen werden, welche eine Verschmutzung der Messbuchsen im Betrieb des Nutzfahrzeugs verhindert. Auf diese Weise soll sichergestellt werden, dass die Messbuchsen bzw. die Spanungsprüfung an den Messbuchsen auch zuverlässig funktionieren bzw. funktioniert, wenn der Monteur eine Wartungs- und/oder Reparaturmaßnahme durchführen will. Möglich ist all dies aber auch bei der Verwendung von Messsteckern anstelle von Messbuchsen. Dabei ist es grundsätzlich auch denkbar, dass eine Messbuchse und ein Messstecker mit dem wenigstens einen Stromkreis verbunden sind, um daran eine Spannungsprüfung vorzunehmen. Dann wird in vielen Fällen jedoch die Spannungsprüfung von einem Monteur weniger einfach und intuitiv erfolgen können, so dass eine Ausgestaltung des Elektronikgehäuses mit einer Messbuchse und einem Messstecker weniger bevorzugt sein wird. Dennoch soll eine solche Ausgestaltung von der Formulierung "Messbuchse oder Messstecker" vorliegend umfasst sein, ohne dass dies wegen der besseren Verständlichkeit und zur Vermeidung von unnötigen Wiederholungen nicht jedes Mal ergänzt wird.

Die genannte Aufgabe ist ferner bei einem Nutzfahrzeug nach dem Oberbegriff von Anspruch 10 dadurch gelöst, dass die Transportkältemaschine ein Elektronikgehäuse nach einem der Ansprüche 1 bis 9 aufweist, dass die Batterie des Nutzfahrzeugs über wenigstens einen Stromkreisstecker und/oder wenigstens eine Stromkreisbuchse elektrisch mit dem Elektronikgehäuse verbunden ist und dass die Batterie den wenigstens einen Stromkreis mit Spannung versorgend vorgesehen ist.

Nutzfahrzeuge werden in vielen Fällen mit einer Transportkältemaschine ausgerüstet, wobei die Transportkältemaschine meist an der Stirnwand eines Kofferaufbaus des Nutzfahrzeugs vorgesehen ist. Die Transportkältemaschine kann dann die Luft in einem im Kofferaufbau vorgesehenen Laderaum herunterkühlen. Es können auch mehrere Laderäume im Kofferaufbau vorgesehen sein, die mittels der Transportkältemaschine und einem mit der Transportkältemaschine verbundenen Deckenverdampfer in einem hinteren Bereich des Kofferaufbaus separat und bedarfsweise auf unterschiedliche Temperaturen heruntergekühlt werden. Bei der Transportkältemaschine handelt es sich erfindungsgemäß um eine Transportkältemaschine der zuvor beschriebenen Art, um deren Vorteile bei dem Nutzfahrzeug ausnutzen zu können. Dies ist in besonderem Maße möglich, da das Nutzfahrzeug eine Batterie umfasst, die über wenigstens einen Stromkreisstecker und/oder wenigstens eine Stromkreisbuchse elektrisch mit dem Elektronikgehäuse verbunden ist und die den wenigstens einen mit den Messbuchsen oder Messsteckern verbundenen Stromkreis mit Spannung versorgt. Es bietet sich in vielen Fällen an, wenn über die Batterie an dem wenigstens einen Stromkreis eine sehr hohe Spannung anliegt. Dies hat jedoch zur Folge, dass ein sehr hohes Risiko für einen Monteur besteht, einen lebensbedrohlichen Stromschlag zu erleiden, wenn er das Elektronikgehäuse zum Zwecke der Wartung oder der Reparatur öffnet.

In diesem Zusammenhang ist es weiter bevorzugt, wenn die Batterie aus Platzgründen außerhalb der Transportkältemaschine vorgesehen ist. Dies kann in vielen Fällen zweckmäßig erreicht werden, wenn die Batterie unterhalb des Kofferaufbaus angeordnet ist.

Hinsichtlich der Elektronikeinheit ist anzumerken, dass die verwendete Begrifflichkeit "Elektronik" nicht zwingend eine Abgrenzung zu dem Begriff "Elektrik" implizieren soll. Unter der Elektronikeinheit soll vielmehr insbesondere eine Einheit verstanden werden, die wenigstens eine Elektronikbaugruppe und/oder wenigstens eine Elektrikbaugruppe aufweist. Erfindungsgemäß kommt es mithin nicht unbedingt darauf an, ob es sich bei der Elektronikbaugruppe tatsächlich um eine solche umfassend Elektronikbaugruppen oder elektrische Baugruppen handelt. Ganz allgemein kann die Elektronikeinheit in einem Elektronikgehäuse untergebracht sein, wobei es sich bei dem Elektronikgehäuse tatsächlich auch wenigstens in Teilen um ein Elektrikgehäuse handeln kann. Der besseren Verständlichkeit halber und zur Vermeidung von unnötigen Wiederholungen wird im Folgenden stets von einer Elektronikeinheit und einem Elektronikgehäuse gesprochen, auch wenn der Begriff "Elektronik" hierbei nicht zwingend im klassischen Sinne zu verstehen sein muss. Zudem kann das Elektronikgehäuse bedarfsweise auch als eine Art Schaltschrank angesehen werden, in dem entsprechende Baugruppen zusammengefasst und mit Baugruppen außerhalb des Elektronikgehäuses und bedarfsweise auch außerhalb der Transportkältemaschine verbunden sind.

Bei einer ersten besonders bevorzugten Ausgestaltung der Transportkältemaschine weist die Elektronikeinheit wenigstens ein Ladegerät und/oder wenigstens einen Frequenzumrichterauf. Diese Bauteile sind bei der Ausbildung von elektrisch betriebenen Transportkältemaschinen von besonderer Bedeutung, da elektrische Transportkältemaschinen über eine Batterie angetrieben werden können, wobei der Betrieb der Transportkältemaschine eine Wechselspannung erfordert, obschon die Batterie eine Gleichspannung zur Verfügung stellt. Der Anschluss der Batterie an das Ladegerät und/oder den Frequenzumrichter kann einfach, zuverlässig und sicher über die Adapterplatte des Elektronikgehäuses erfolgen, in dem das Ladegerät und/oder der Frequenzumrichter geschützt aufgenommen sind.

Die genannten Vorteile werden umso mehr erreicht, wenn das Ladegerät einen Laderegler und ein Netzteil umfasst. So können der Laderegler und das Netzteil zusammen geschützt in dem Elektronikgehäuse aufgenommen und zugleich mit der Batterie verbunden sein. Der Laderegler stellt dabei sicher, dass das Laden der Batterie in vorbestimmter Weise erfolgt, während das Netzteil eine Wandlung der Spannung auf ein anderes Spannungsniveau als das der für das Laden eingesetzten Spannung besorgt. Für das Laden der Batterie kann beispielsweise eine aus einem äußeren Stromnetz bezogene Spannung oder eine vom Nutzfahrzeug während des Fahrens selbst erzeugte Spannung genutzt werden. Hinsichtlich des Frequenzumrichters bietet es sich alternativ oder zusätzlich an, wenn der Frequenzumrichter ein bidirektionaler Frequenzumrichter ist. **In** diesem Fall kann der Frequenzumrichter beispielsweise die Gleichspannung der Batterie in Wechselspannung zum Betrieb der Transportkältemaschine sowie Wechselspannung zum Laden der Batterie in Gleichstrom wandeln.

Die erfindungsgemäßen Vorteile erlangen auch dadurch eine hohe Bedeutung, dass der wenigstens eine Stromkreis mit dem Ladegerät und/oder mit dem Frequenzumrichter verbunden ist. In wenigstens einem solchen Stromkreis ist es von besonderem Vorteil, wenn dort beim Betrieb der Transportkältemaschine sehr hohe Spannungen anliegen. Ob diese tatsächlich anliegen, wenn ein Monteur beabsichtigt, das Elektronikgehäuse zu öffnen, kann dann in einfacher, schneller und sicherer Weise ermittelt werden, indem ein zweipoliger Spannungsprüfer mit den Messbuchsen oder Messsteckern des noch verschlossenen Elektronikgehäuses verbunden wird. Entweder der angeschlossene wenigstens eine Stromkreis ist spannungsfrei oder weist eine hinreichend geringe Spannung auf, so dass das Elektronikgehäuse verhältnismäßig gefahrlos geöffnet werden kann, oder der Spannungsprüfer zeigt eine Spannung oder eine solch hohe Spannung an, dass der Monteur erkennen kann, dass sich die Elektronikeinheit nicht in einem entsprechend sicheren Zustand befindet, in dem das Elektronikgehäuse mit vertretbarem Risiko geöffnet werden kann.

In diesem Zusammenhang, aber auch grundsätzlich, dient es der Sicherheit des Monteurs, wenn die zwei Messbuchsen oder Messstecker ohne ein Öffnen des Elektronikgehäuses von außen am Elektronikgehäuse zugänglich sind. So kann eine unnötige Gefährdung ausgeschlossen und eine versehentliche Fehlbedienung vermieden werden.

Wenn eine Messbuchse oder ein Messstecker schwarz gekennzeichnet ist, während die andere Messbuchse oder der andere Messstecker rot gekennzeichnet ist, ist für den geübten Monteur unschwer zu erkennen, dass es sich hierbei um Messbuchsen oder Messstecker handelt, an denen die Spannung an einem verbundenen Stromkreis gemessen werden kann. Dem Monteur ist dann auch bewusst, wie die beiden Pole des Spanungsprüfers mit den Messbuchsen oder den Messsteckern zu verbinden sind, um ein aussagekräftiges Messergebnis zu erhalten.

Die beiden Messbuchsen können dabei der Einfachheit halber als Sicherheitsbuchsen, Bananenbuchsen, Laborbuchsen oder als Sicherheitslaborbuchsen ausgebildet sein. Der Monteur erkennt diese Messbuchsen dann auch ohne eine besondere Schulung oder die Gefahr einer versehentlichen Verwechslung. Diese Art von Messbuchsen werden nämlich auch an anderer Stelle als Messbuchsen zur Spannungsprüfung verwendet.

Aus Effizienzgründen ist es bevorzugt, wenn die Spannung insbesondere zwischen der Batterie und dem Ladegerät, zwischen der Batterie und dem Frequenzumrichter oder zwischen dem Frequenzumrichter und dem Ladegerät, zwischen 500 V und 900 V, vorzugsweise zwischen 600 V und 800 V, insbesondere zwischen 650 V und 750 V beträgt. Es kann sich bei dem wenigstens einen Stromkreis daher um einen die Batterie mit dem Ladegerät, die Batterie mit dem Frequenzumrichter und/oder das Ladegerät mit dem Frequenzumrichter verbindenden Stromkreis handeln. Bei solch hohen möglichen Spannungen besteht eine besondere Gefährdung des Monteurs und kommen die erfindungsgemäßen Vorteile in besonderem Maße zum Tragen. Dies gilt aber auch dann, wenn es sich bei dem wenigstens einen mit den Messbuchsen oder den Messsteckern verbundenen Stromkreis um einen solchen handelt, in dem beim Betrieb der Transportkältemaschine wenigstens phasenweise Spannungen zwischen 500 V und 900 V, vorzugsweise zwischen 600 V und 800 V, insbesondere zwischen 650 V und 750 V auftreten können.

Des einfacheren Anschlusses halber kann das Elektronikgehäuse wenigstens zwei von außen, insbesondere ohne ein Öffnen des Elektronikgehäuses, zugängliche Stromkreisbuchsen und/oder Stromkreisstecker des wenigstens einen Stromkreises aufweisen. Es befindet sich dann der wenigstens eine Stromkreis teilweise innerhalb des Elektronikgehäuses und teilweise außerhalb des Elektronikgehäuses, wobei der Stromkreis über die Stromkreisbuchsen und/oder die Stromkreisstecker aus dem Elektronikgehäuse herausgeführt ist. Dies bedeutet letztlich auch, dass über die Spannungsprüfung an den Messbuchsen oder den Messsteckern festgestellt werden kann, ob der außerhalb des Elektronikgehäuses angeordnete Teil des wenigstens einen Stromkreises spannungslos ist oder eine solch geringe Spannung aufweist, die unterhalb einer Grenzspannung liegt, welche eine Wartung oder Reparatur mit vertretbarem Risiko für den Monteur erlaubt. Zudem kann eine entsprechende Ausgestaltung des wenigstens einen Stromkreises eine einfachere und kostengünstigere Verschaltung der Elektronikeinheit mit außerhalb des Elektronikgehäuse liegenden elektrischen Baugruppen ermöglichen.

Um ein Überhitzen der Elektronikeinheit im Elektronikgehäuse zu verhindern, kann es zudem zweckmäßig sein, wenn ein Kühlkreislauf mit einer Pumpe und mit einem Kühler zum Abgeben von Wärme an die Umgebung vorgesehen und wenigstens teilweise in dem Elektronikgehäuse angeordnet ist. Dabei kann das Elektronikgehäuse der Einfachheit halber zwei Kühlmittelanschlüsse aufweisen, wobei der Kühler und bedarfsweise die Pumpe eines außerhalb des Elektronikgehäuses verlegten Teils des Kühlkreislaufs mit einem im Elektronikgehäuse verlegten Teil des Kühlkreislaufs verbunden ist. Auch dies ist apparativ einfach und zugleich verfahrensmäßig funktional.

Bei einer ersten besonders bevorzugten Ausgestaltung des Nutzfahrzeugs ist zwischen der Batterie und dem Elektronikgehäuse eine elektrische Trenneinrichtung zum elektrischen Unterbrechen des wenigstens einen Stromkreises zwischen der Batterie und dem Elektronikgehäuse vorgesehen. Um sicherzustellen, dass die Elektronikeinheit im Elektronikgehäuse nicht mehr mit einer, in vielen Fällen sehr hohen, Spannung beaufschlagt wird, kann die Trenneinrichtung betätigt werden. Die Trenneinrichtung ist dabei vorzugsweise so ausgebildet, dass optisch erkennbar ist, ob die Trenneinrichtung betätigt, also der Stromkreis getrennt worden ist. Alternativ oder zusätzlich kann die Trenneinrichtung aber auch so ausgebildet sein, dass durch ein haptisches und/oder akustisches Signal erkennbar ist, wenn der Monteur die Trenneinrichtung tatsächlich aktiviert, also den Stromkreis getrennt hat. Hierbei kann beispielsweise ein spürbarer Widerstand überwunden werden und/oder ein klackendes Geräusch erzeugt werden. Der Einfachheit halber sowie für einen sicheren und zuverlässigen Umgang mit der Trenneinrichtung bietet es sich insbesondere an, wenn die Trenneinrichtung als Schalter oder Taster ausgebildet ist.

Die erfindungsgemäßen Vorteile kommen in besonderem Maße zum Tragen, wenn die Spannung der Batterie wenigstens 500 V, vorzugsweise wenigstens 600 V, insbesondere wenigstens im Wesentlichen 700 V beträgt. **In** diesem Fall ist es von besonderer Bedeutung, sicher feststellen zu können, ob ein Zugang zur Elektronikeinheit im Elektronikgehäuse mit einem vertretbaren Risiko möglich ist.

Unabhängig davon bietet es sich weiter an, wenn eine mit einem Generator verbundene Achse des Nutzfahrzeugs vorgesehen ist und der mit der Achse verbundene Generator über wenigstens einen Stecker und/oder wenigstens eine Buchse des Elektronikgehäuses elektrisch mit dem Elektronikgehäuse, insbesondere mit der im Elektronikgehäuse angeordneten Elektronikeinheit, verbunden ist. So kann die Transportkältemaschine mit dem mittels der Achse und dem der Achse zugeordneten Generator erzeugten Strom betrieben werden. Alternativ oder zusätzlich lässt sich aber auch die Batterie des Nutzfahrzeugs mit dem so erzeugten Strom laden. Insbesondere im letztgenannten Fall, treten in der Elektronikeinheit im Elektronikgehäuse vorzugsweise weiter erhöhte Spannungen auf, die an dem wenigstens einen, mit den Messbuchsen oder Messsteckern verbundenen Stromkreis anliegen können. Mithin kommen die erfindungsgemäßen Vorteile bei einem solchen Nutzfahrzeug in besonderem Maße zum Tragen. Der wenigstens eine mit den Messbuchsen oder den Messsteckern verbundene Stromkreis kann also letztlich von dem mit der Achse gekoppelten Generator mit Spannung versorgend ausgebildet sein.

Alternativ oder zusätzlich zu einer solchen, auch als Generatorachse bezeichneten Achse, kann eine Drehstromsteckdose oder ein Drehstromstecker an der Transportkältemaschine oder am Nutzfahrzeug vorgesehen sein. Wenn die Drehstromsteckdose oder die Drehstromstecker über wenigstens einen Stecker und/oder wenigstens eine Buchse des Elektronikgehäuses elektrisch mit dem Elektronikgehäuse verbunden ist, kann die Transportkältemaschine durch Anschluss an ein externes Stromnetz betrieben werden. Es kann über den Anschluss der Elektronikeinheit an das externe Stromnetz aber auch, insbesondere zeitgleich, die Batterie geladen werden. Zu diesen Zwecken und der Einfachheit halber kann es sich bei der Drehstromsteckdose oder dem Drehstromstecker vorzugsweise um eine CEE32-Buchse oder einen CEE32-Stecker handeln. Unabhängig davon ist es ebenfalls bevorzugt, wenn der wenigstens eine Stromkreis über die Drehstromsteckdose mit Spannung versorgt werden kann.

Nachfolgend wird die Erfindung anhand einer lediglich ein Ausführungsbeispiel darstellenden Zeichnung näher erläutert. In der Zeichnung zeigt
- Fig. 1: ein von einer Zugmaschine gezogenes erfindungsgemäßes Nutzfahrzeug mit einer erfindungsgemäßen Transportkältemaschine in einer perspektivischen Ansicht,
- Fig. 2: eine Draufsicht auf die Stirnwand des Nutzfahrzeugs aus Fig, 1 mit der Transportkältemaschine,
- Fig. 3: das Elektronikgehäuse der Transportkältemaschine aus Fig. 2 in einer perspektivischen Ansicht und
- Fig. 4: ein Fließbild betreffend die Transportkältemaschine aus Fig. 2 und ein Nutzfahrzeug aus Fig. 1.

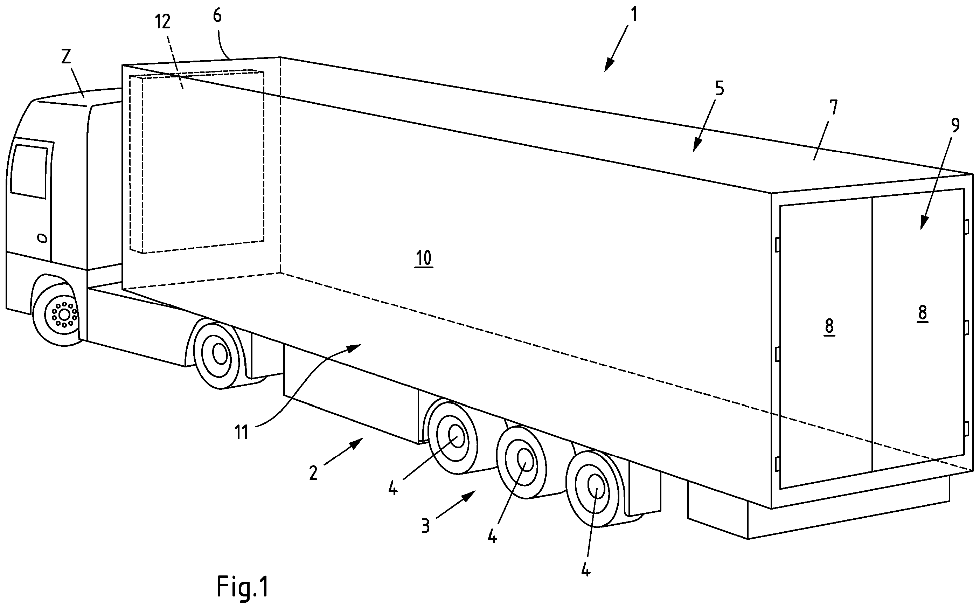

In der Fig. 1 ist ein von einer Zugmaschine Z gezogenes Nutzfahrzeug N in Form eines Sattelaufliegers dargestellt. Das Nutzfahrzeug 1 umfasst ein Chassis 2 und ein daran befestigtes Fahrwerk 3, welches drei separate Achsen 4 aufweist. Von dem Chassis 2 wird zudem ein Kofferaufbau 5 mit einer festen Stirnwand 6, einem festen Dach 7, festen Rückwandtüren 8 an einer Rückwand 9 und festen Seitenwänden 10 getragen. Die Stirnwand 6, die Seitenwände 10 und das Dach 7 werden durch nicht näher dargestellte Paneele gebildet, welche eine äußere Decklage und eine innere Decklage aufweisen, zwischen denen eine Kernlage aus einem geschäumten Kunststoff vorgesehen ist. Bei der inneren Decklage und der äußeren Decklage handelt es sich um strukturgebende Decklagen, die auch jeweils mehrlagig ausgebildet sein können. Die Kernlage dient dabei primär der thermischen Isolierung eines im Kofferaufbau 5 vorgesehenen Laderaums 11.

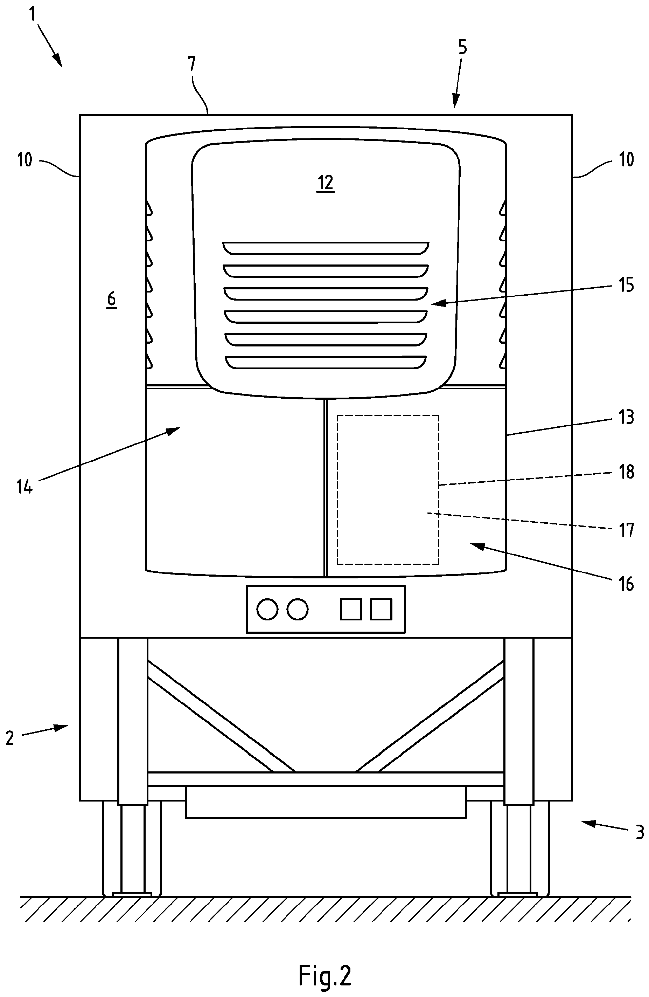

Um den Laderaum 11 des Kofferaufbaus 5 herunterkühlen zu können, ist an der Stirnwand 6 des Kofferaufbaus 5 eine insbesondere in der Fig. 2 dargestellte Transportkältemaschine 12 montiert, welche von einem Gehäuse 13 umschlossen ist. Von der Transportkältemaschine 12 wird Luft aus dem Laderaum 11 angesaugt, abgekühlt und wieder zurück in den Laderaum 11 geblasen. Zu diesem Zweck weist die Transportkältemaschine 12 einen nicht näher dargestellten Kältekreislauf 14 auf, der an sich grundsätzlich bekannt und prinzipiell auch in anderen Transportkältemaschinen vorgesehen ist. In dem Kältekreislauf 14 zirkuliert ein Kältemittel, von dem Wärme aufgenommen und an anderer Stelle wieder abgegeben werden kann. Der Kältekreislauf 14 umfasst dabei einen Verdampfer zum Verdampfen des Kältemittels, einen Verdichter zum Verdichten des im Verdampfer verdampften Kältemittels, einen Kondensator zum Kondensieren des im Verdichter verdichteten Kältemittels und eine dem Verdampfer vorgeschaltete Drossel zum Entspannen des im Kondensator kondensierten Kältemittels. Das Kältemittel nimmt beim Verdampfen Wärme von der Luft im Laderaum 11 auf, die anschließend im Kondensator beim Kondensieren des Kältemittels wieder an die Umgebung abgegeben wird. Zum Antrieb des Kältekreislaufs und zum Anheben des Druckniveaus des Kältemittels ist der Verdichter vorgesehen. Um das Druckniveau des Kältemittels wieder zu senken und das Kältemittel wieder zu verdampfen, ist eine Drossel vorgesehen, die im konkreten Fall als ein Expansionsventil ausgebildet sein kann.

Die Transportkältemaschine umfasst neben dem Kältekreislauf 14 noch einen einen Kühler 15 aufweisenden Kühlkreislauf 16, der nicht dem Kühlen des Laderaums 11, sondern dem Kühlen der Transportkältemaschine 12 selbst dient, und zwar konkret dem Kühlen einer Elektronikeinheit 17 der Transportkältemaschine 12. Die Elektronikeinheit 17 ist dabei in einem Elektronikgehäuse 18 der Transportkältemaschine 12 aufgenommen und umfasst ein Ladegerät aus einem Netzteil und einem Laderegler sowie einen, insbesondere bidirektionalen, Frequenzumrichter. Diese Bauteile erwärmen sich während des Betriebs der Transportkältemaschine 12, weshalb deren Wärme über den Kühlkreislauf 16 aus dem Elektronikgehäuse 18 abgeführt werden kann. Der Kühlkreislauf 16 verläuft bei der dargestellten und insoweit bevorzugten Transportkältemaschine 12 teilweise im Elektronikgehäuse 18 und teilweise außerhalb des Elektronikgehäuses 18. Außerhalb des Elektronikgehäuses 18 ist eine Pumpe im Kühlkreislauf 16 angeordnet, wobei die Pumpe auch innerhalb des Elektronikgehäuses 18 angeordnet sein könnte. Die Pumpe sorgt dafür, dass das Kühlmittel im Kühlkreislauf 16 zirkuliert und durch den außerhalb des Elektronikgehäuses 18 angeordneten Kühler 15 strömt. Der Kühler 15 wird wie auch der Kondensator des Kältekreislaufs 14 von Kühlluft aus der Umgebung angeströmt.

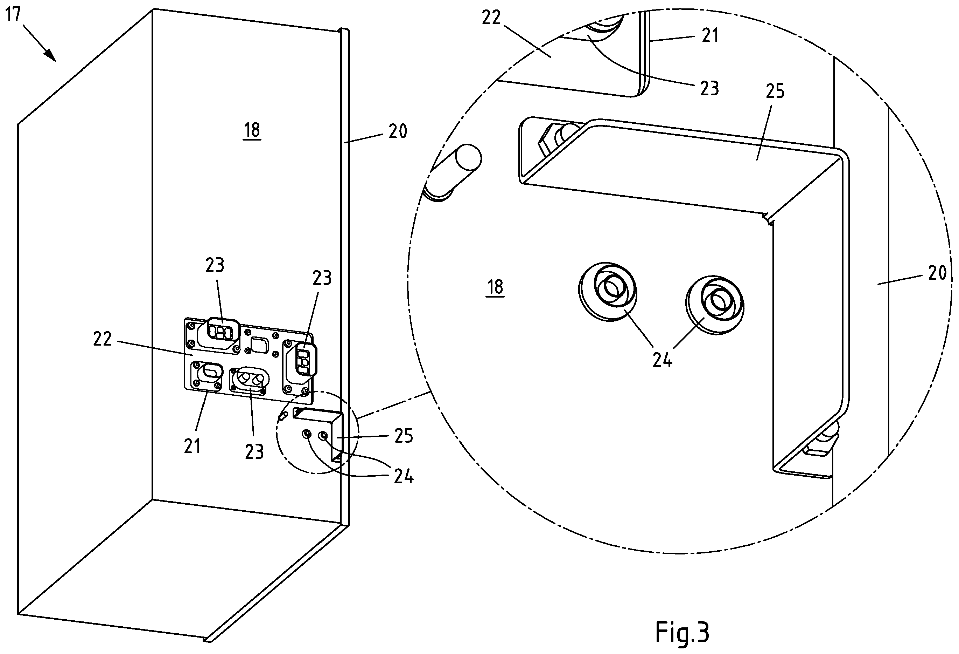

In der Fig. 3 ist das Elektronikgehäuse 18 in einer perspektivischen Ansicht dargestellt. Das Elektronikgehäuse 18 weist zwei nicht dargestellte Anschlüsse des Kühlkreislaufs 16 auf, über die der Kühler 15 und die Pumpe an den in dem Elektronikgehäuse 18 verlegten Teil des Kühlkreislaufs 16 anzuschließen sind. Das dargestellte und insoweit bevorzugte Elektronikgehäuse 18 ist vorzugsweise aus Blech gebildet und umfasst einen Deckel 20, der erst dann von einem Monteur geöffnet werden sollte, wenn sich das Elektronikgehäuse 18, insbesondere die in dem Elektronikgehäuse 18 vorgesehene Elektronikeinheit 17, in einem sicheren Zustand befindet, welcher einen verhältnismäßig gefahrlosen Zugang zur Elektronikeinheit 17 ermöglicht.

Das dargestellte und insoweit bevorzugte Elektronikgehäuse 18 weist ferner eine Aussparung 21 auf, die durch eine Adapterplatte 22 verschlossen ist. Auf der Adapterplatte 22 sind Buchsen 23 montiert, in die der besseren Übersichtlichkeit halber nicht dargestellte Stecker eingesteckt sind. Die entsprechenden Steckverbindungen dienen dazu, elektrische Verbindungen zwischen der in dem Elektronikgehäuse 18 angeordneten Elektronikeinheit 17 und außerhalb des Elektronikgehäuses 18 angeordneten Baugruppen, wie beispielsweise einer Batterie, einer Generatorachse, einer Drehstromsteckdose, einer Pumpe, einem Lüfter, einem Heizstab, einem Netzteil und/oder einem Verdichter, herzustellen.

Des Weiteren sind an dem Elektronikgehäuse 18 zwei Messbuchsen 24 vorgesehen, die von außen zugänglich sind, ohne dass das Elektronikgehäuse 18 geöffnet werden müsste. An die Messbuchsen 24 kann ein zweipoliger Spannungsprüfer angeschlossen werden, um die Spannung des wenigstens einen an die Messbuchsen 24 angeschlossenen Stromkreises zu erfassen. Der Stromkreis ist wenigstens teilweise im Elektronikgehäuse 18 angeordnet und bildet bei der dargestellten und insoweit bevorzugten Transportkältemaschine 12 einen Teil der im Elektronikgehäuse 18 aufgenommenen Elektronikeinheit 17. Bei den Messbuchsen 24 handelt es sich beispielsweise um Sicherheitsbuchsen, Bananenbuchsen, Laborbuchsen oder Sicherheitslaborbuchsen. Die Messbuchsen 24 sind, wenn sie nicht in Gebrauch sind, zum Schutz vor Verschmutzung und Feuchtigkeit mit nicht dargestellten Kappen verschlossen, die unverlierbar an dem Elektronikgehäuse 18 festgelegt sein können, und zwar auch dann, wenn die Kappen zur Erfassung der Spannung in dem wenigstens einen Stromkreis von den Messbuchsen 24 entfernt worden sind. Zudem ist den Messbuchsen 24 bei dem dargestellten und insoweit bevorzugten Elektronikgehäuse 18 eine Schutzeinheit 25 zugeordnet, welche eine versehentliche Beschädigung der Messbuchsen 24 verhindern soll. Die dargestellte Schutzeinheit 25 ist an zwei Seiten der Messbuchsen 24 vorgesehen, obwohl die Schutzeinheit 25 auch an einer anderen Zahl von Seiten bezogen auf die Messbuchsen 24 vorgesehen sein könnte. Zudem ist die dargestellte Schutzeinheit 25 im Sinne einer gegenüber dem Elektronikgehäuse 18 vorstehenden Rippe und als Blechteil ausgebildet. Beides ist aber nicht zwingend erforderlich.

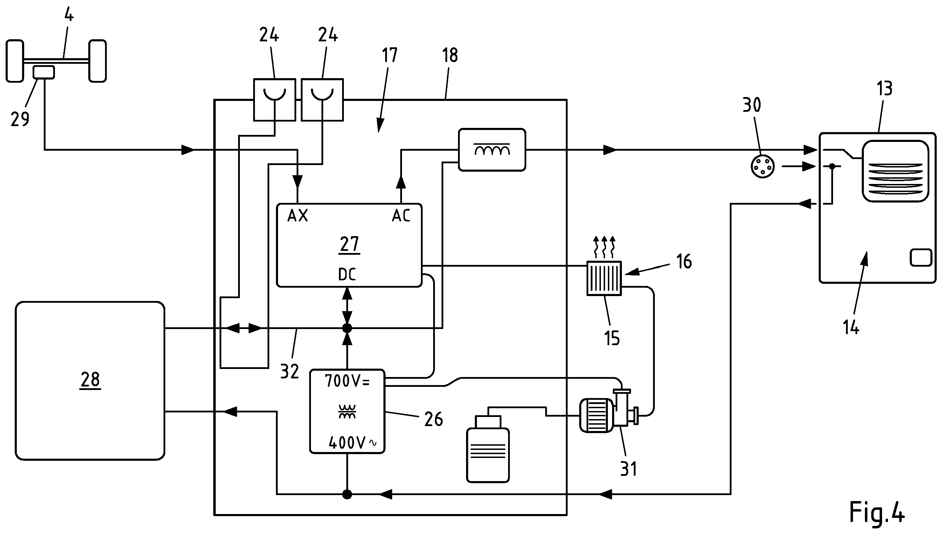

**In** der Fig. 4 ist ein schematisches Fließbild des Nutzfahrzeugs 1 und der Transportkältemaschine 12 dargestellt. **In** der Mitte der Fig. 4 ist ein Elektronikgehäuse 18 mit einer Elektronikeinheit 17 dargestellt, die ein Ladegerät 26 und einen Frequenzumrichter 27 umfasst. Es können grundsätzlich noch weitere Baugruppen oder auch andere Baugruppen in dem Elektronikgehäuse 18 vorgesehen sein, die ferner zur Elektronikeinheit 17 zählen können. Das Ladegerät 26 und der Frequenzumrichter27 sind dabei mit einer außerhalb des Elektronikgehäuses 18, insbesondere unterhalb des Kofferaufbaus 5, am Nutzfahrzeug 1 vorgesehenen Batterie 28 verbunden. Zudem ist der Frequenzumrhichter27 mit einem Generator 29 verbunden, der mit einer Achse 4 des Nutzfahrzeugs 1 gekoppelt ist. Über die Achse 4 und den Generator 29 kann während der Fahrt des Nutzfahrzeugs 1 Strom erzeugt werden, der zum Antrieb der Transportkältemaschine 12 genutzt werden kann. Dafür wird jedoch zunächst mittels des Frequenzumrichters 27 ein Wechselstrom mit konstanter Frequenz erzeugt, da die Frequenz des vom Generator 29 erzeugten Stroms abhängig von der Rotationsgeschwindigkeit der Achse 4 bzw. des Generators 29 ist. Wenn das Nutzfahrzeug 1 steht, kann die Transportkältemaschine 12 über eine Drehstromsteckdose 30 an ein externes Stromnetz angeschlossen werden, um die Transportkältemaschine 12 mit Spannung zu versorgen. Die Drehstromsteckdose 30 ist an das Ladegerät 26 angeschlossen, mit dem die Batterie 28 des Nutzfahrzeugs 1 geladen werden kann. Zudem kann der von dem Generator 29 erzeugte Strom über den Frequenzumrichter 27 in einen Gleichstrom zum Laden der Batterie 28 gewandelt werden. Der Generator 29 und die Drehstromsteckdose 30 sind wie die Batterie 28 außerhalb des Elektronikgehäuses 18 angeordnet. Auch ist der Kältekreislauf 14 außerhalb des Elektronikgehäuses 18 angeordnet.

Die Verbindungen zwischen der im Elektronikgehäuse 18 vorgesehenen Elektronikeinheit 17 und den außerhalb des Elektronikgehäuses 18 vorgesehenen elektrischen Baugruppen, können allesamt mit den Buchsen 23 an der Adapterplatte 22 des Elektronikgehäuses 18 etabliert werden, indem entsprechende Kabel mit den Buchsen 23 korrespondierenden Steckern in die Buchsen 23 an der Adapterplatte 22 eingesteckt werden. In dem Fließbild der Fig. 4 sind diese Anschlüsse lediglich schematisch dargestellt und daher verteilt über das Elektronikgehäuse 18 dargestellt. Die entsprechenden Verbindungen sind jedoch vorzugsweise, anders als in dem Fließbild dargestellt, an der Adapterplatte 22 räumlich konzentriert.

In dem Elektronikgehäuse 18 ist ein Teil des Kühlkreislaufs 16 vorgesehen, der thermisch mit dem Frequenzumrichter 27 und dem Ladegerät 26 gekoppelt ist, um diesen Baugruppen Wärme zu entziehen. Das auf diese Weise erwärmte Kühlmittel strömt dann in den außerhalb des Elektronikgehäuses 18 angeordneten Kühler 15, mit dem Wärme an die Kühlluft abgegeben wird, bevor das so abgekühlte Kühlmittel mittels einer Pumpe 31 zurück in das Elektronikgehäuse 18 gepumpt wird. Der Kühlkreislauf 16 ist also teilweise innerhalb des Elektronikgehäuses 18 und teilweise außerhalb des Elektronikgehäuses 18 vorgesehen.

Die Messbuchsen 24 sind elektrisch mit einem Stromkreis 32 verbunden, der die in dem Elektronikgehäuse 18 angeordnete Elektronikeinheit 17 mit der Batterie 28 des Nutzfahrzeugs 1 verbindet. Der Stromkreis 32 ist dabei teilweise Teil der Elektronikeinheit 17 und teilweise außerhalb des Elektronikgehäuses 18 angeordnet. Innerhalb des Elektronikgehäuses 18 ist der Stromkreis 32 sowohl mit dem Frequenzumrichter 27 als auch mit dem Ladegerät 26 verbunden. Dies ist bevorzugt aber nicht zwingend erforderlich.

### Bezugszeichenliste

- 1: Nutzfahrzeug
- 2: Chassis
- 3: Fahrwerk
- 4: Achsen
- 5: Kofferaufbau
- 6: Stirnwand
- 7: Dach
- 8: Rückwandtür
- 9: Rückwand
- 10: Seitenwand
- 11: Laderaum
- 12: Transportkältemaschine
- 13: Gehäuse
- 14: Kältekreislauf
- 15: Kühler
- 16: Kühlkreislauf
- 17: Elektronikeinheit
- 18: Elektronikgehäuse
- 20: Deckel
- 21: Aussparung
- 22: Adapterplatte
- 23: Buchse
- 24: Messbuchsen
- 25: Schutzeinheit
- 26: Ladegerät
- 27: Frequenzumrichter
- 28: Batterie
- 29: Generator
- 30: Drehstromsteckdose
- 31: Pumpe
- 32: Stromkreis
- Z: Zugmaschine

## Patentansprüche

1. Transportkältemaschine (12) zur Kühlung eines Kofferaufbaus (5) eines Nutzfahrzeugs (1), insbesondere eines Lastkraftwagens, eines Anhängers oder eines Sattelaufliegers, mit einem Kältekreislauf (14) zur Kreislaufführung eines Kältemittels und mit einer Elektronikeinheit (17) zum Betreiben des Kältekreislaufs (14), wobei der Kältekreislauf (14) wenigstens einen Verdampfer zum Verdampfen des Kältemittels, einen Verdichter zum Verdichten des im Verdampfer verdampften Kältemittels, einen Kondensator zum Kondensieren des im Verdichter verdichteten Kältemittels und eine Drossel zum Entspannen des im Kondensator kondensierten Kältemittels umfasst, wobei die Elektronikeinheit (17) in einem Elektronikgehäuse (14) aufgenommen ist und wobei das Elektronikgehäuse (17) wenigstens einen Teil wenigstens eines Stromkreises (32) aufweist,
**dadurch gekennzeichnet, dass**
das Elektronikgehäuse (17) wenigstens zwei von außen zugängliche und mit dem wenigstens einen Teil des wenigstens einen Stromkreises (32) elektrisch verbundene Messbuchsen (24) oder Messstecker zur Messung der Spannung des wenigstens einen Stromkreises (32) über einen mit den Messbuchsen (24) oder Messsteckern verbindbaren zweipoligen Spannungsprüfer aufweist.

2. Transportkältemaschine nach Anspruch 1,
**dadurch gekennzeichnet, dass**
das Elektronikgehäuse (17) wenigstens ein Ladegerät (26) und/oder einen Frequenzumrichter (27) aufweist und dass, vorzugsweise, das Ladegerät (26) einen Laderegler und ein Netzteil aufweist und/oder der Frequenzumrichter (27) ein bidirektionaler Frequenzumrichter ist.

3. Transportkältemaschine nach Anspruch 1 oder 2,
**dadurch gekennzeichnet, dass**
der wenigstens eine Stromkreis mit dem Ladegerät (26) und/oder mit dem Frequenzumrichter (27) verbunden ist.

4. Transportkältemaschine nach einem der Ansprüche 1 bis 3,
**dadurch gekennzeichnet, dass**
die zwei Messbuchsen (24) oder Messstecker ohne ein Öffnen des Elektronikgehäuses (17) von außen zugänglich sind.

5. Transportkältemaschine nach einem der Ansprüche 1 bis 4,
**dadurch gekennzeichnet, dass**
eine Messbuchse (24) oder ein Messstecker schwarz gekennzeichnet und die andere Messbuchse (24) oder der andere Messstecker rot gekennzeichnet ist.

6. Transportkältemaschine nach einem der Ansprüche 1 bis 5,
**dadurch gekennzeichnet, dass**
die zwei Messbuchsen (24) als Sicherheitsbuchsen, Bananenbuchsen, Laborbuchsen oder als Sicherheitslaborbuchsen ausgebildet sind.

7. Transportkältemaschine (12) nach einem der Ansprüche 1 bis 6,
**dadurch gekennzeichnet, dass**
an dem wenigstens einen Stromkreis im Betrieb der Transportkältemaschine (12) wenigstens phasenweise eine Spannung zwischen 500 V und 900 V, vorzugsweise zwischen 600 V und 800 V, insbesondere zwischen 650 V und 750 V, insbesondere zwischen der Batterie (28) und dem Ladegerät (26), zwischen der Batterie (28) und dem Frequenzumrichter (27) und/oder zwischen dem Frequenzumrichter (27) und dem Ladegerät, anliegt.

8. Transportkältemaschine nach einem der Ansprüche 1 bis 7,
**dadurch gekennzeichnet, dass**
der wenigstens eine Stromkreis teilweise innerhalb des Elektronikgehäuses (17) und teilweise außerhalb des Elektronikgehäuses (17) angeordnet ist.

9. Transportkältemaschine nach einem der Ansprüche 1 bis 8,
**dadurch gekennzeichnet, dass**
ein Kühlkreislauf mit einer Pumpe (31) und mit einem Kühler (15) zum Abgeben von Wärme an die Umgebung vorgesehen und wenigstens teilweise in dem Elektronikgehäuse (17) angeordnet ist und dass, vorzugsweise, wenigstens der Kühler (15) über zwei Kühlmittelanschlüsse am Elektronikgehäuse (17) mit dem im Elektronikgehäuse verlegten Teil des Kühlkreislaufs (14) verbunden ist.

10. Nutzfahrzeug (1), insbesondere Lastkraftwagen, Anhänger oder Sattelauflieger, mit einem Kofferaufbau (5), einer Transportkältemaschine (12) zum Kühlen eines im Kofferaufbau (5) vorgesehenen Laderaums (11) und einer unterhalb des Kofferaufbaus (5) angeordneten Batterie (28) zum Betrieb der Transportkältemaschine (12),
**dadurch gekennzeichnet, dass**
die Transportkältemaschine (12) ein Elektronikgehäuse (17) nach einem der Ansprüche 1 bis 9 aufweist, dass die Batterie (28) des Nutzfahrzeugs (1) über wenigstens einen Stromkreisstecker und/oder wenigstens eine Stromkreisbuchse elektrisch mit dem Elektronikgehäuse (17) verbunden ist und dass die Batterie (28) den wenigstens einen Stromkreis (32) mit Spannung versorgend vorgesehen ist.

11. Nutzfahrzeug nach Anspruch 10,
**dadurch gekennzeichnet, dass**
zwischen der Batterie (28) und dem Elektronikgehäuse (17) eine elektrische Trenneinrichtung zum elektrischen Unterbrechen des wenigstens einen Stromkreises (32) zwischen der Batterie (28) und dem Elektronikgehäuse (17) vorgesehen ist und dass, vorzugsweise, die elektrische Trenneinrichtung als Schalter oder Taster ausgebildet ist.

12. Nutzfahrzeug nach Anspruch 10 oder 11,
**dadurch gekennzeichnet, dass**
die Spannung der Batterie (28) wenigstens 500 V, vorzugsweise wenigstens 600 V, insbesondere wenigstens im Wesentlichen 700 V beträgt.

13. Nutzfahrzeug nach einem der Ansprüche 10 bis 12,
**dadurch gekennzeichnet, dass**
eine mit einem Generator (29) verbundene Achse (4) des Nutzfahrzeugs (1) vorgesehen ist und dass der mit der Achse (4) verbundene Generator (29) über wenigstens einen Stecker und/oder wenigstens eine Buchse des Elektronikgehäuses (17) elektrisch mit dem Elektronikgehäuse (17) verbunden ist und dass, vorzugsweise, der wenigstens eine Stromkreis von dem Generator (29) mit Spannung versorgend ausgebildet ist.

14. Nutzfahrzeug nach einem der Ansprüche 10 bis 13,
**dadurch gekennzeichnet, dass**
eine Drehstrombuchse (30) an der Transportkältemaschine (12) oder am Nutzfahrzeug (1) vorgesehen ist und dass die Drehstrombuchse (30) über wenigstens einen Stecker und/oder wenigstens eine Buchse des Elektronikgehäuses (17) elektrisch mit dem Elektronikgehäuse (17) verbunden ist und dass, vorzugsweise, der wenigstens eine Stromkreis (32) den wenigstens einen Stromkreises (32) mit Spannung versorgend ausgebildet ist.

## Claims

1. Transport refrigerating machine (12) for cooling a box body (5) of a utility vehicle (1), in particular a truck, a trailer or a semi-trailer, with a refrigeration circuit (14) for circulating a refrigerant and with an electronic unit (17) for operating the refrigeration circuit (14), wherein the refrigeration circuit (14) comprises at least one evaporator for evaporating the refrigerant, a compressor for compressing the refrigerant evaporated in the evaporator, a condenser for condensing the refrigerant compressed in the compressor and a throttle for expanding the refrigerant condensed in the condenser, wherein the electronic unit (17) is accommodated in an electronics housing (14) and wherein the electronics housing (17) has at least one part of at least one current circuit (32),
**characterized in that**
the electronics housing (17) has at least two measuring sockets (24) or measuring plugs which are accessible from the outside and are electrically connected to the at least one part of the at least one current circuit (32) for measuring the voltage of the at least one current circuit (32) via a two-pole voltage tester which is connectable to the measuring sockets (24) or measuring plugs.

2. Transport refrigeration machine according to claim 1, **characterized in that** the electronics housing (17) has at least one charger (26) and/or one frequency inverter (27) and **in that**, preferably, the charger (26) has a charge controller and a power supply unit and/or the frequency inverter (27) is a bidirectional frequency inverter.

3. Transport refrigeration machine according to claim 1 or 2,
**characterized in that**
the at least one current circuit is connected to the charger (26) and/or to the frequency inverter (27).

4. Transport refrigeration machine according to one of claims 1 to
3, **characterized in that**
the two measuring sockets (24) or measuring plugs are accessible from the outside without opening the electronics housing (17).

5. Transport refrigeration machine according to one of claims 1 to 4,
**characterized in that**
one measuring socket (24) or one measuring plug is marked black and the other measuring socket (24) or the other measuring plug is marked red.

6. Transport refrigeration machine according to one of claims 1 to 5,
**characterized in that**
the two measuring sockets (24) are configured as safety sockets, banana sockets, laboratory sockets or as safety laboratory sockets.

7. Transport refrigeration machine (12) according to one of claims 1 to 6,
**characterized in that**
a voltage between 500 V and 900 V, preferably between 600 V and 800 V, in particular between 650 V and 750 V, in particular between the battery (28) and the charger (26), between the battery (28) and the frequency inverter (27) and/or between the frequency inverter (27) and the charger, is applied at least in phases to the at least one current circuit during operation of the transport refrigeration machine (12).

8. Transport refrigeration machine according to one of claims 1 to 7,
**characterized in that**
the at least one current circuit is arranged partly inside the electronics housing (17) and partly outside the electronics housing (17).

9. Transport refrigeration machine according to one of claims 1 to 8,
**characterized in that**
a refrigeration circuit with a pump (31) and with a cooler (15) for emitting heat to the environment is provided and is arranged at least partially in the electronics housing (17) and that, preferably, at least the cooler (15) is connected via two coolant connections on the electronics housing (17) to the part of the refrigeration circuit (14) laid inside the electronics housing.

10. Utility vehicle (1), in particular a truck, trailer or semi-trailer, having a box body (5), a transport refrigerating machine (12) for cooling a loading space (11) provided in the box body (5) and a battery (28) arranged underneath the box body (5) for operating the transport refrigerating machine (12),
**characterized in that**
the transport refrigeration machine (12) has an electronics housing (17) according to one of claims 1 to 9, that the battery (28) of the utility vehicle (1) is electrically connected to the electronics housing (17) via at least one current circuit plug and/or at least one current circuit socket, and that the battery (28) is provided to supply the at least one current circuit (32) with voltage.

11. Utility vehicle according to claim 10,
**characterized in that**
an electrical disconnecting device is provided between the battery (28) and the electronics housing (17) for electrically interrupting the at least one current circuit (32) between the battery (28) and the electronics housing (17) and **in that**, preferably, the electrical disconnecting device is configured as a switch or pushbutton.

12. Utility vehicle according to claim 10 or 11,
**characterized in that**
the voltage of the battery (28) is at least 500 V, preferably at least 600 V, in particular at least substantially 700 V.

13. Utility vehicle according to one of claims 10 to 12, **characterized in that** an axle (4) of the utility vehicle (1) connected to a generator (29) is provided and that the generator (29) connected to the axle (4) is electrically connected to the electronics housing (17) via at least one plug and/or at least one socket of the electronics housing (17) and that, preferably, the at least one current circuit is configured to be supplied with voltage by the generator (29).

14. Utility vehicle according to one of claims 10 to 13,
**characterized in that**
a rotary current socket (30) is provided on the transport refrigeration machine (12) or on the utility vehicle (1) and that the three-phase current socket (30) is electrically connected to the electronics housing (17) via at least one plug and/or at least one socket of the electronics housing (17) and that, preferably, the at least one current circuit (32) is configured to supply the at least one current circuit (32) with voltage.

## Revendications

1. Machine frigorifique de transport (12) pour refroidir une caisse (5) d'un véhicule utilitaire (1), en particulier d'un camion, d'une remorque ou d'une semi-remorque, avec un circuit frigorifique (14) pour la circulation d'un fluide frigorigène et avec une unité électronique (17) pour exploiter du circuit frigorifique (14), où le circuit frigorifique (14) comprend au moins un évaporateur pour évaporer le fluide frigorigène, un compresseur pour comprimer le fluide frigorigène évaporé dans l'évaporateur, un condenseur pour condenser le fluide frigorigène comprimé dans le compresseur et un étranglement pour détendre le fluide frigorigène condensé dans le condenseur, où l'unité électronique (17) est logée dans un boîtier électronique (14) et le boîtier électronique (17) a au moins une partie d'au moins un circuit électrique (32),
**caractérisée en ce que**
le boîtier électronique (17) a au moins deux douilles de mesure (24) ou fiches de mesure accessibles de l'extérieur et reliées électriquement à la au moins une partie du au moins un circuit électrique (32) pour mesurer la tension du au moins un circuit électrique (32) par un testeur de tension bipolaire reliable aux douilles de mesure (24) ou aux fiches de mesure.

2. Machine frigorifique de transport selon la revendication 1,
**caractérisée en ce que**
le boîtier électronique (17) comporte au moins un chargeur (26) et/ou un convertisseur de fréquence (27) et que, de préférence, le chargeur (26) a un régulateur de charge et un bloc d'alimentation et/ou le convertisseur de fréquence (27) est un convertisseur de fréquence bidirectionnel.

3. Machine frigorifique de transport selon la revendication 1 ou 2,
**caractérisée en ce que**
le au moins un circuit électrique est relié au chargeur (26) et/ou au convertisseur de fréquence (27).

4. Machine frigorifique de transport selon l'une des revendications 1 à 3,
**caractérisée en ce que**
les deux douilles de mesure (24) ou fiches de mesure sont accessibles de l'extérieur sans ouvrir le boîtier électronique (17).

5. Machine frigorifique de transport selon l'une des revendications 1 à 4,
**caractérisée en ce qu'**
une douille de mesure (24) ou une fiche de mesure est marquée en noir et l'autre douille de mesure (24) ou l'autre fiche de mesure est marquée en rouge.

6. Machine frigorifique de transport selon l'une des revendications 1 à 5,
**caractérisée en ce que**
les deux douilles de mesure (24) sont des douilles de sécurité, des douilles bananes, des douilles de laboratoire ou des douilles de laboratoire de sécurité.

7. Machine frigorifique de transport (12) selon l'une des revendications 1
**à 6, caractérisé en ce qu'**
une tension comprise entre 500 V et 900 V, de préférence entre 600 V et 800 V, en particulier entre 650 V et 750 V, est appliquée au moins par phases à l'au moins un circuit électrique pendant le fonctionnement de la machine frigorifique de transport (12), en particulier entre la batterie (28) et le chargeur (26), entre la batterie (28) et le convertisseur de fréquence (27) et/ou entre le convertisseur de fréquence (27) et le chargeur.

8. Machine frigorifique de transport selon l'une des revendications 1 à 7,
**caractérisée en ce que**
le au moins un circuit électrique est disposé en partie à l'intérieur du boîtier électronique (17) et en partie à l'extérieur du boîtier électronique (17).

9. Machine frigorifique de transport selon l'une des revendications 1 à 8,
**caractérisée en ce qu'**
un circuit de refroidissement comprenant une pompe (31) et un radiateur (15) pour céder de la chaleur à l'environnement est prévu et disposé au moins en partie dans le boîtier électronique (17) et que, de préférence, au moins le radiateur (15) est relié à la partie du circuit de refroidissement (14) disposée dans le boîtier électronique par deux raccords de réfrigérant sur le boîtier électronique (17).

10. Véhicule utilitaire (1), en particulier camion, remorque ou semi-remorque, avec une caisse (5), une machine frigorifique de transport (12) pour refroidir un espace de chargement (11) prévu dans la caisse (5) et une batterie (28) disposée en dessous de la caisse (5) pour faire fonctionner la machine frigorifique de transport (12),
**caractérisée en ce que**
**que** la machine frigorifique de transport (12) a un boîtier électronique (17) selon l'une des revendications 1 à 9, que la batterie (28) du véhicule utilitaire (1) est reliée électriquement au boîtier électronique (17) par au moins une fiche de circuit électrique et/ou d'au moins une douille de circuit électrique, et que la batterie (28) est prévue pour alimenter en tension le au moins un circuit électrique (32).

11. Véhicule utilitaire selon la revendication 10,
**caractérisé en ce qu'**
un dispositif de coupure électrique est prévu entre la batterie (28) et le boîtier électronique (17) pour interrompre électriquement l'au moins un circuit électrique (32) entre la batterie (28) et le boîtier électronique (17) et que, de préférence, le dispositif de coupure électrique est réalisé sous forme d'interrupteur ou de bouton-poussoir.

12. Véhicule utilitaire selon la revendication 10 ou 11,
**caractérisé en ce que**
la tension de la batterie (28) est d'au moins 500 V, de préférence d'au moins 600 V, en particulier d'au moins essentiellement 700 V.

13. Véhicule utilitaire selon l'une des revendications 10 à 12,
**caractérisée en ce qu'**
un essieu (4) du véhicule utilitaire (1) relié à un générateur (29) est prévu et que le générateur (29) relié à l'essieu (4) est relié électriquement au boîtier électronique (17) par au moins une fiche et/ou d'au moins une douille du boîtier électronique (17) et que, de préférence, le au moins un circuit électrique est réalisé en étant alimenté en tension par le générateur (29).

14. Véhicule utilitaire selon l'une des revendications 10 à 13,
**caractérisée en ce qu'**
une prise de courant triphasé (30) est prévue sur la machine frigorifique de transport (12) ou sur le véhicule utilitaire (1) et que la prise de courant triphasé (30) est reliée électriquement au boîtier électronique (17) par au moins une fiche et/ou d'au moins une douille du boîtier électronique (17) et que, de préférence, le au moins un circuit électrique (32) est configuré pour alimenter en tension le au moins un circuit électrique (32).
